(19) **Europäisches Patentamt**
**European Patent Office**
**Office européen des brevets**

(11) **EP 4 621 687 A1**

(12) **EUROPEAN PATENT APPLICATION**

(43) Date of publication:
**24.09.2025 Bulletin 2025/39**

(21) Application number: **25165145.1**

(22) Date of filing: **20.03.2025**

(51) International Patent Classification (IPC):
**G06Q 30/018** (2023.01)     **G06Q 50/02** (2024.01)
**H04L 9/00** (2022.01)

(52) Cooperative Patent Classification (CPC):
**G06Q 30/018; G06Q 10/0635; G06Q 50/02;
H04L 9/50;** H04L 2209/56

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: **22.03.2024 IN 202421022071**

(71) Applicant: **Tata Consultancy Services Limited
Mumbai, Maharashtra 400 021 (IN)**

(72) Inventors:
• **SAKKAN, Mariappan
600113 Chennai, Tamil Nadu (IN)**

• **SINGH, Dineshkumar Jang Bahadur
400601 Thane (West), Maharashtra (IN)**
• **MOHITE, Jayantrao
400601 Thane (West), Maharashtra (IN)**
• **SARANGI, Sanat
400601 Thane (West), Maharashtra (IN)**
• **SIVALINGAM, Ravinkumar
600113 Chennai, Tamil Nadu (IN)**
• **PAPPULA, Srinivasu
500081 Hyderabad, Telangana (IN)**

(74) Representative: **Goddar, Heinz J.
Boehmert & Boehmert
Anwaltspartnerschaft mbB
Pettenkoferstrasse 22
80336 München (DE)**

(54) **TOKENIZATION OF SUSTAINABILITY DEVELOPMENT GOALS (SDGS) BASED FARM SUSTAINABILITY INDICES AND CERTIFICATES**

(57) Embodiments of the present disclosure provide a method and system for tokenization Sustainability Development Goals (SDGs) based Farm Sustainability Indices (FSIs) and certificates. There has been hardly any attempt to tokenize FSI by creating Non-fungible Tokens (NFTs). The FSI is estimated as a weighted combination on FSI indicators such as Farming viability of the farm (FVF), Re-Carbonization of farm (Re-CoF) and Landholding for social livelihood (LASOL). Tokenization of the FSI and FSI indicators in combination with relevant SDGs and SDG indicators enables monetizing of the sustainability effort of the farm to a worldwide accepted standard. Thus, improving the usability of the digital asset of the FSI into the trade.

FIG. 1B

EP 4 621 687 A1

**Description**

CROSS-REFERENCE TO RELATED APPLICATIONS AND PRIORITY

The present application claims priority to Indian application no. 202421022071, filed on March 22, 2024.

TECHNICAL FIELD

The embodiments herein generally relate to the field of agricultural technology and, more particularly, to a method and system for tokenization of Sustainability Development Goals (SDGs) based farm sustainability indices (FSIs) and certificates.

BACKGROUND

The agriculture sector around the world faces three major challenges namely, feeding the growing population, providing livelihood to farmers, and protecting the environment. With changing climate, increasing food demand and dwindling natural resources the risk of farming system collapse is very high. Presently the need for sustainable resource management is increasingly urgent. Sustainable farms have deep connections to global food security and human societies making it one of the most important frontiers for conservation around the world. It has been observed that practicing sustainable agriculture is of quite a bit of importance for the world because it increases productivity, efficiency, and employment while also providing guidance to reduce the practices that affect the quality of soil, water resources, and the degradation of other natural resources at the farm level. In such cases, assessment and tokenization of sustainable agriculture farmlands and monitoring such farms sustainability status and its associated Sustainable Development Goal (SDG) indicators are critical to protect overall welfare by providing sufficient food and other goods and services in ways that are economically efficient and profitable, socially responsible, and environmentally sound. However, assessment and tokenization of sustainable farm index and its SDG indicators across the globe (Economic, Environment and Social viability ) have certain challenges.

1) Sustainable farm management is an essential approach to farming that aims to promote long-term sustainability by preserving natural resources, increasing productivity, and ensuring food security.
2) Most farmers adopt conventional and traditional agricultural practices which is not sustainable. They waste natural resources, which in turn decreases soil fertility, leads to soil erosion, and plays a role in the progression of global climate change.
3) In many parts of world, decreasing soil fertility is one of the biggest problems. Fertility and the structure of the soil are both improved by sustainable management of farms.
4) The inefficient use of land can lead to problems such as flooding, landslides, and erosion. It can also choke irrigation channels and limit the land's arable potential. These issues can be avoided with sustainable agriculture thanks to its increased productivity and protection of the soil, among other benefits.
5) The production of greenhouse gases is aided in several different ways by conventional agriculture, including the reduction of the amount of carbon that is stored in the soil and in vegetation, the production of methane in irrigated fields, and the production of artificial fertilizers, among other ways. This issue can be readily remedied by switching to a more environmentally friendly method of farming.
6) Long-term economic viability is a necessary condition for agriculture to meet the criteria for sustainability. In the long run, there is a greater chance of losing money with conventional farming than with sustainable farming.
7) To maintain sustainable farms and sustainable crop production, making the right decisions for efficient utilization of natural resources that lead to sustained economic, environment and ecology of the farm sustainability without degrading the land resource on which production depends.
8) Most of the progressive farmers have been adopting sustainable practices for cultivating crops, knowingly or unknowingly but achieving sustainability is often much not easier in the high farm with multiple physical and biological constraints. In most cases, this is because the resource base is of higher potential and more resilient.
9) The quantifiable indicators of a sustainable farm and its associated SDG indicators assessment using non-invasive and invasive methods to help move the farm towards a sustainable food production unit. There is no defined or standardized method for assessing sustainability of farms and their associated SDG indicators in the world.
10) Farm sustainability index and SDG indicators work well to the policymakers, farmers, banks, food retailers and civil society to better understand sustainable farms and its viability, identify trends, set targets, monitor progress, and compare performance among regions and countries etc.

Existing approaches do not consider how the farms have utilize natural resources efficiently over the past year, the crops grown, all the sustainable farm activities performed and practice affected the quality of soil to produce over the years, which pests interfered in the cultivation cycles, how the type and quantity of agricultural inputs affected the farmland, how much carbon was sequestered in the farm are the variables.

SUMMARY

Embodiments of the present disclosure present technological improvements as solutions to one or more of the above-mentioned technical problems recognized by the inventors in conventional systems.

For example, in one embodiment, a method for tokenization of Sustainability Development Goals (SDG) based farm sustainability indices (FSIs) and certificates is provided. The method includes acquiring for a farmland, a plurality of historical and current parameters related to a plurality of indicators contributing to a Farm Sustainability Index (FSI).

Further, the method includes estimating the FSI as a weighted summation of the plurality of indicators comprising Farming Viability of the Farm (FVF), Re-Carbonization of farm (Re-CoF), and Landholding for Social Livelihood (LASOL). The FVF is estimated as weighted summation of Cropping Intensity (CI), and a Crop Health Risk (CHR), Farm Productivity (FP), and Farm Resilience Capacity (FRC), wherein each of the CI, CHR, FP and FRC is estimated and categorized into a performance level among a plurality of performance levels by processing the plurality of historical and current parameters contributing to the FVF. The Re-CoF is estimated as weighted summation of a Regenerative Agriculture practice (RAP), a Soil Organic Matter Ratio (SOMR), and a Biodiversity Risk (BR) of the farmland, wherein each of the RAP, the SOMR and the BR is estimated and categorized into the performance level from among the plurality of performance levels by processing the plurality of historical and current parameters contributing to the Re-CoF. The LASOL is estimated as weighted summation of Farmland size, Farmland tenure and type of farmland each is estimated and categorized into the performance levels from among the plurality of performance levels by processing the plurality of historical and current parameters contributing to the LASOL. The farmland is categorized into one of a plurality of sustainability levels comprising sustainable, moderately sustainable, and unsustainable based on percentage value of the estimated FSI.

Further, the method includes determining compliance of farmland to one or more Sustainable Development Goals (SDGs) and SDG indicators using a FSI to SDG matrix and FSI to SDG indicator matrix based on the estimated FSI, the estimated FVF, the estimated Re-CoF, and the estimated LASOL.

Furthermore, the method includes generating generate, by the one or more processors, a plurality of certificates for the farmland comprising a FVF certificate, a Re-CoF certificate, and a LASOL certificate based on the estimated FVF, the estimated Re-CoF, and the estimated LASOL, and compliance of the farmland to the one or more SDGs and SDG indicators.

Further, the method includes tokenizing, (i) the FSI into a parent FSI NFT based on the categorized sustainability level among the plurality of sustainability levels, and (ii) the FVF certificate into a FVF NFT, the Re-CoF certificate into a RE-CoF NFT, and the LASOL certificate into a LASOL NFT, in addition to a farmland NFT created for the farmland, wherein the parent FSI NFT, the FVF NFT , the Re-CoF NFT, the LASOL NFT, and the farmland NFT is open for trade on blockchain based transactions.

In another aspect, a system for assessment and tokenization of Farm Sustainability Index (FSI) and Farm associated Sustainable Development Goals (SDGs) and SDG indicators is provided. The system comprises a memory storing instructions; one or more Input/Output (I/O) interfaces; and one or more hardware processors coupled to the memory via the one or more I/O interfaces, wherein the one or more hardware processors are configured by the instructions to acquire for a farmland, a plurality of historical and current parameters related to a plurality of indicators contributing to a Farm Sustainability Index (FSI).

Further, the one or more hardware processors are configured to estimate the FSI as a weighted summation of the plurality of indicators comprising Farming Viability of the Farm (FVF), Re-Carbonization of farm (Re-CoF), and Landholding for Social Livelihood (LASOL). The FVF is estimated as weighted summation of Cropping Intensity (CI), and a Crop Health Risk (CHR), Farm Productivity (FP), and Farm Resilience Capacity (FRC), wherein each of the CI, CHR, FP and FRC is estimated and categorized into a performance level among a plurality of performance levels by processing the plurality of historical and current parameters contributing to the FVF. The Re-CoF is estimated as weighted summation of a Regenerative Agriculture practice (RAP), a Soil Organic Matter Ratio (SOMR), and a Biodiversity Risk (BR) of the farmland, wherein each of the RAP, the SOMR and the BR is estimated and categorized into the performance level from among the plurality of performance levels by processing the plurality of historical and current parameters contributing to the Re-CoF. The LASOL is estimated as weighted summation of farmland size, farmland tenure, and type of farmland, each is estimated and categorized into the performance levels from among the plurality of performance levels by processing the plurality of historical and current parameters contributing to the LASOL. The farmland is categorized into one of a plurality of sustainability levels comprising sustainable, moderately sustainable, and unsustainable based on percentage value of the estimated FSI.

Further, the one or more hardware processors are configured to determine compliance of farmland to one or more Sustainable Development Goals (SDGs) and SDG indicators using a FSI to SDG matrix and FSI to SDG indicator matrix based on the estimated FSI, the estimated FVF, the estimated Re-CoF, and the estimated LASOL.

Furthermore, the one or more hardware processors are configured to generate a plurality of certificates for the farmland comprising a FVF certificate, a Re-CoF certificate, and a LASOL certificate based on the estimated FVF, the estimated Re-CoF, and the estimated LASOL, and compliance of the farmland to the one or more SDGs and SDG indicators.

Further, the one or more hardware processors are configured to tokenize, (i) the FSI into a parent FSI NFT based on the categorized sustainability level among the plurality of sustainability levels, and (ii) the FVF certificate into a FVF NFT, the Re-CoF certificate into a RE-CoF NFT, and the LASOL certificate into a LASOL NFT, in addition to a farmland NFT created for the farmland, wherein the parent FSI NFT, the FVF NFT , the Re-CoF NFT, the LASOL NFT, and the farmland NFT is open for trade on blockchain based transactions.

In yet another aspect, there are provided one or more non-transitory machine-readable information storage mediums comprising one or more instructions, which when executed by one or more hardware processors causes a method for assessment and tokenization of Farm Sustainability Index (FSI) and Farm associated Sustainable Development Goals (SDGs) and SDG indicators. The method includes acquiring for a farmland, a plurality of historical and current parameters related to a plurality of indicators contributing to a Farm Sustainability Index (FSI).

Further, the method includes estimating the FSI as a weighted summation of the plurality of indicators comprising Farming Viability of the Farm (FVF), Re-Carbonization of farm (Re-CoF), and Landholding for Social Livelihood (LASOL). The FVF is estimated as weighted summation of Cropping Intensity (CI), and a Crop Health Risk (CHR), Farm Productivity (FP), and Farm Resilience Capacity (FRC), wherein each of the CI, CHR, FP and FRC is estimated and categorized into a performance level among a plurality of performance levels by processing the plurality of historical and current parameters contributing to the FVF. The Re-CoF is estimated as weighted summation of a Regenerative Agriculture practice (RAP), a Soil Organic Matter Ratio (SOMR), and a Biodiversity Risk (BR) of the farmland, wherein each of the RAP, the SOMR and the BR is estimated and categorized into the performance level from among the plurality of performance levels by processing the plurality of historical and current parameters contributing to the Re-CoF. The LASOL is estimated as weighted summation of farmland size, farmland tenure, and type of farmland each estimated and categorized into the performance levels from among the plurality of performance levels by processing the plurality of historical and current parameters contributing to the LASOL. The farmland is categorized into one of a plurality of sustainability levels comprising sustainable, moderately sustainable, and unsustainable based on percentage value of the estimated FSI.

Further, the method includes determining compliance of farmland to one or more Sustainable Development Goals (SDGs) and SDG indicators using a FSI to SDG matrix and FSI to SDG indicator matrix based on the estimated FSI, the estimated FVF, the estimated Re-CoF, and the estimated LASOL.

Furthermore, the method includes generating generate, by the one or more processors, a plurality of certificates for the farmland comprising a FVF certificate, a Re-CoF certificate, and a LASOL certificate based on the estimated FVF, the estimated Re-CoF, and the estimated LASOL, and compliance of the farmland to the one or more SDGs and SDG indicators.

Further, the method includes tokenizing, (i) the FSI into a parent FSI NFT based on the categorized sustainability level among the plurality of sustainability levels, and (ii) the FVF certificate into a FVF NFT, the Re-CoF certificate into a RE-CoF NFT, and the LASOL certificate into a LASOL NFT, in addition to a farmland NFT created for the farmland, wherein the parent FSI NFT, the FVF NFT , the Re-CoF NFT, the LASOL NFT, and the farmland NFT is open for trade on blockchain based transactions.

It is to be understood that both the foregoing general description and the following detailed description are exemplary and explanatory only and are not restrictive of the invention, as claimed.

BRIEF DESCRIPTION OF THE DRAWINGS

The accompanying drawings, which are incorporated in and constitute a part of this disclosure, illustrate exemplary embodiments and, together with the description, serve to explain the disclosed principles:

FIG. 1A is a functional block diagram of a system for tokenization of Sustainability Development Goals (SDGs) based farm sustainability indices (FSIs) and certificates, in accordance with some embodiments of the present disclosure.
FIG. 1B illustrates an architectural overview of the system of FIG. 1A, in accordance with some embodiments of the present disclosure.
FIG. 2 is a flow diagram illustrating a method for tokenization of SDGs based farm sustainability indices (FSIs) and certificates, using the system depicted in FIG. 1A and 1B, in accordance with some embodiments of the present disclosure.
FIG. 3 depicts an example mapping of FSI to FVF, RE-CoF, and LASOL and indicators to the SDGs, in accordance with some embodiments of the present disclosure.
FIG. 4 depicts an example mapping of FSI indicators to various related business, trading, and commercial organizations, in accordance with some embodiments of the present disclosure.

It should be appreciated by those skilled in the art that any block diagrams herein represent conceptual views of illustrative systems and devices embodying the principles of the present subject matter. Similarly, it will be appreciated that any flow charts, flow diagrams, and the like represent various processes which may be substantially represented in computer readable medium and so executed by a computer or processor, whether or not such computer or processor is explicitly shown.

DETAILED DESCRIPTION OF EMBODIMENTS

Exemplary embodiments are described with reference to the accompanying drawings. In the figures, the left-most digit(s) of a reference number identifies the figure in which the reference number first appears. Wherever convenient, the same reference numbers are used throughout the drawings to refer to the same or like parts. While examples and features of disclosed principles are described herein, modifications, adaptations, and other implementations are possible without departing from the scope of the disclosed embodiments.

Attempts have been made to convert sustainability approaches of organization into qualitative of quantitative scoring to determine compliance to sustainability goals but not to minute level of SDG indicators. Few works have focused only on automated mapping of organizations/entities to Sustainability Development Goal (SDG) defined by United nations (UN) @ https://sdgs.un.org/goals to indicate compliance but have no specific focus on farm sustainability mapping. Again they do not handle the mapping further to the level of SDG indicators. Some other works have focused only on digitizing the sustainability index of farms. However, obtaining a true representation of sustainability score requires multitude of farm related parameters to be monitored that represent all round sustainability consideration. Further, there are no attempts to combining sustainability score with SDGs and then generating a digital asset for trade needs that bring sustainability index of farm and SDG on a single platform for monetization of compliance met by the farmers.

Embodiments of the present disclosure provide a method and system for tokenization of Sustainability Development Goals (SDGs) based farm sustainability indices (FSIs) and certificates. As of now there is hardly any existing mechanism for assessment, and tokenization of sustainability index of the farm and its associated SDG indicators using multi-technology approach. The indicators such as Farming viability of the farm (FVF), Re-Carbonization of farm (Re-CoF) and Landholding for social livelihood (LASOL) are assessed to estimate sustainability of the farm and then tokenized using Non Fungible Token (NFT). Digitization of FSI components or indicators in combination with relevant SDGs mapping to each component enables monetizing of the sustainability effort of the farm to a worldwide accepted standard. Thus, improving the ease usability of the digital asset generated for the FSI into the trade.

As mentioned earlier, individual attempts have been made in sustainability scoring or SDG mapping. For example, one among few relevant works in farm sustainability scoring domain such *as "Agricultural sustainability assessment framework integrating sustainable development goals and interlinked priorities of environmental, climate and agriculture policies" by* Justas Streimikis, Tomas Baležentis talks about a set of associations between economic, environment and social factors towards Green House Gas (GHG) emissions from agriculture. It however does not objectively define or teach how these parameters come together to create intermediate or final indices that could be used to rank or score in order to take decisions.

In contrast, the method disclosed herein covers many factors over a wider canvas such as Cropping Intensity (CI), and a Crop Health Risk (CHR), Farm Productivity (FP), and Farm Resilience Capacity (FRC), Regenerative Agriculture practice (RAP), a Soil Organic Matter Ratio (SOMR), and a Biodiversity Risk (BR) of the farmland, Farmland size, Farmland tenure, and type of farmland for a bigger sustainability objective. These are not anticipated by existing approaches. The method disclosed provides specific and computable intermediate indices which can be used for objective assessments at the FVF, Re-CoF, LASOL levels as well as the final index towards overall sustainability considerations for the farm. Prior art fails to teach any of these. Further, the work in the literature is Europe geography specific, unlike the method disclosed herein, which refrains from bias towards a specific geography or set of data sources and does not refer to digitization of sustainability score for the farm.

Another patent application, US20230334407A1, titled *"Method and system for sustainable development goal (SDG) performance assessment of an enterprise" applied by the applicant Tata Consultancy Services Ltd,* focusses on attributes pertinent to a (or rather any) general purpose enterprise. So even with its broad social, environment and economic pointers, from the invention standpoint it fails to anticipate indicators or their assessments which are specific to a farming scenario with emphasis on operations linked to farming. In other words, viability of the farm (FVF), re-carbonization of farm (Re-CoF) and Land holding for social livelihood (LASOL) as proposed indicators involve a deeper interaction of farming-specific contextual factors disclosed by the method herein are not applicable to other or a general purpose enterprise. Further, since the farm and farming context specific indicators of the method disclosed including FVF, Re-CoF, and LASOL, are fundamentally different from the more generic Burden (B), Benefit (B) and Vulnerability (V) indicators in above existing patent application, the scoring and mapping approach to SDG is also different. For example, the Farm Sustainability Index that combines individual indicators into a common index with specific weighting assumptions is not remotely anticipated by prior arts. Further, the existing patent application does not talk about tokenization, wherein tokenization such as generating NFTs enables effective valuation and usage of these SDG mappings in trade platform provided by blockchain networks.

Another work in literature titled *"Development and validation of an index to measure agricultural sustainability" by Naser Valizadeh, Dariush Hayati* for measuring sustainability of farms is based on Multi-criteria based decision making analysis (MCDA), which may involve subjective or human bias. Moreover, many of the indicators used need data from the farmers or fields, which is not possible to get using non-invasive ways. Such an approach (while comprehensive) limits the operational scalability of the approach. Moreover, as highlighted by the authors, they have compiled the key indicators from the various literature studied and many such individual (non-standardized) approaches are proposed for agricultural sustainability calculation. However, the method disclosed herein focuses on estimation of the three indicators of FSI such as FVF, Re-COF and LASOL, which are mapped to SDG indicators to create the tradable assets. The method disclosed herein standardizes FSI scoring by linking it with SDG goals and indicators.

The term farm and farmland are used interchangeably throughout the description.

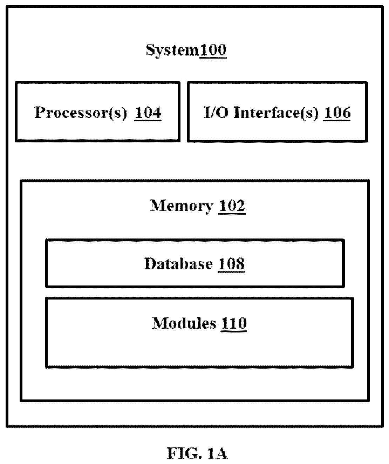

Referring now to the drawings, and more particularly to FIGS. 1A through 4, where similar reference characters denote corresponding features consistently throughout the figures, there are shown preferred embodiments, and these embodiments are described in the context of the following exemplary system and/or method.

FIG. 1A is a functional block diagram of a system for tokenization of the SDGs based farm sustainability indices (FSIs) and certificates, in accordance with some embodiments of the present disclosure.

In an embodiment, the system 100 includes a processor(s) 104, communication interface device(s), alternatively referred as input/output (I/O) interface(s) 106, and one or more data storage devices or a memory 102 operatively coupled to the processor(s) 104. The system 100 with one or more hardware processors is configured to execute functions of one or more functional blocks of the system 100.

Referring to the components of system 100, in an embodiment, the processor(s) 104, can be one or more hardware processors 104. In an embodiment, the one or more hardware processors 104 can be implemented as one or more microprocessors, microcomputers, microcontrollers, digital signal processors, central processing units, state machines, logic circuitries, and/or any devices that manipulate signals based on operational instructions. Among other capabilities, the one or more hardware processors 104 are configured to fetch and execute computer-readable instructions stored in the memory 102. In an embodiment, the system 100 can be implemented in a variety of computing systems including laptop computers, notebooks, hand-held devices such as mobile phones, workstations, mainframe computers, servers, and the like.

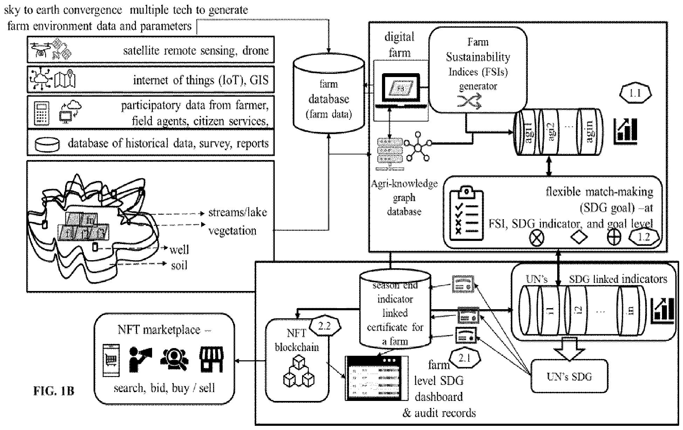

The I/O interface(s) 106 can include a variety of software and hardware interfaces, for example, a web interface, a graphical user interface and the like and can facilitate multiple communications within a wide variety of networks N/W and protocol types, including wired networks, for example, LAN, cable, etc., and wireless networks, such as WLAN, cellular and the like. In an embodiment, the I/O interface (s) 106 can include one or more ports for connecting to a number of external devices or to another server or devices. For example various sensors and mobile devices at a farm location that capture/ acquire farm related parameters for FSI can be interfaced to the system 100 via the I/O interface 106. As depicted in architectural diagram of the system 100 in FIG. 1B multiple technological elements are integrated to generate farm environment data and parameters. Examples include satellite remote sensing, drone internet of things (IoT), Geographic Information Systems (GIS), participatory data from farmers, field agents, citizen services database of historical data, survey, and reports.

The memory 102 may include any computer-readable medium known in the art including, for example, volatile memory, such as static random access memory (SRAM) and dynamic random access memory (DRAM), and/or non-volatile memory, such as read only memory (ROM), erasable programmable ROM, flash memories, hard disks, optical disks, and magnetic tapes.

In an embodiment, the memory 102 includes a plurality of modules 110 for computing FSI and the components (FSI indicators) including FVF, Re-COF and LASOL, generating table for mapping FSI and FSI indicators to SDGs and SDG indicators. generating certificates for estimated FSI, the estimated FVF, estimated Re-COF and estimated LASOL further mapped based on compliance with associated SDGs and SDG indicators. Further, memory includes modules for tokenizing the FSI and the FVF, Re-COF and LASOL by creating NFTs.

Further the plurality of modules 110 include programs or coded instructions that supplement applications or functions performed by the system 100 for executing different steps involved in the process of assessment and tokenization of FSI and farm associated SDGs and SDG indicators, being performed by the system 100. The plurality of modules 110, amongst other things, can include routines, programs, objects, components, and data structures, which performs particular tasks or implement particular abstract data types. The plurality of modules 110 may also be used as, signal processor(s), node machine(s), logic circuitries, and/or any other device or component that manipulates signals based on operational instructions. Further, the plurality of modules 110 can be used by hardware, by computer-readable instructions executed by the one or more hardware processors 104, or by a combination thereof. The plurality of modules 110 can include various sub-modules (not shown).

Further, the memory 102 may comprise information pertaining to input(s)/output(s) of each step performed by the processor(s) 104 of the system100 and methods of the present disclosure.

Further, the memory 102 includes a database 108. The database (or repository) 108 may include a plurality of abstracted pieces of code for refinement and data that is processed, received, or generated as a result of the execution of the plurality of modules in the module(s) 110. Further the database 108 may include (i) farm database that acquires a plurality of historical and current parameters from the plurality of sources, wherein the parameters are related to a plurality of indicators, also referred to as FSI indicators, contributing to the FSI, (ii) agri-knowledge graph database, (iii) a FSI to SDG matrix and a FSI to SDG indicator matrix to determine compliance of each of the FSI and FSI indicators to one or more relevant SDGs and SDG indicators. The matrices have mapping to the FSI, FVF, the Re-CoF, and the LASOL. The plurality of sources also include a plurality of sensors deployed on the farmland, satellite imagery and external databases.

Although the data base 108 is shown internal to the system 100, it will be noted that, in alternate embodiments, the database 108 can also be implemented external to the system 100, and communicatively coupled to the system 100. The data contained within such an external database may be periodically updated. For example, new data may be added into the database (not shown in FIG. 1A) and/or existing data may be modified and/or non-useful data may be deleted from the database. In one example, the data may be stored in an external system, such as a Lightweight Directory Access Protocol (LDAP) directory and a Relational Database Management System (RDBMS). Functions of the components of the system 100 are now explained with reference to steps in flow diagrams in FIG. 1B through FIG. 3.

FIG. 1B illustrates an architectural overview of the system of FIG. 1A, in accordance with some embodiments of the present disclosure. The FIG. 1B depicts farm and external invasive and non-invasive resources such as satellite imaging that capture the farm parameters related to farm sustainability index. For example various sensors and mobile devices at a farm location that capture/ acquire farm related parameters for FSI can be interfaced to the system 100 via the I/O interface 106. As depicted in architectural diagram of the system 100 in FIG. 1B, multiple technological elements are integrated to generate farm environment data and parameters. Examples include satellite remote sensing, drone, internet of things (IoT), the GIS, participatory data from farmers, field agents, citizen services database of historical data, survey, and reports. Hand-held devices or mobile phones are connected with the system 100 with sensing, processing, communicating and storage capability. Time series remote sensing data (Optical as well as Synthetic Aperture Radar data), coarse and high-resolution satellite data is collected continuously for each farm. Geo-tagged plots and associated crop type (for current and historical period) are also tagged with registered farmland. Field level weather observations, like air temperature, rainfall, land surface temperature, etc. from (automatic weather stations, satellites, on-field sensors) are also collected. Further, Global Positioning System (GPS) enabled mobile phones to capture images, reported incidents, farmer queries, etc., along with a few geo-tagged points to form the field boundaries of the selected fields. Mobile crowd-sourcing applications or programs running on a mobile phone or similar portable handheld device are also a source of information gathering. All the above information is sourced using well known interfacing approaches in the art and is processed by the system 100 using well known techniques of data cleaning, processing, and structuring to store the processed outputs into the farm database.

The parameters collected and processed for each farm say *f1* to *fn* are stored in the farm database. Each farm will be identified and registered with its geolocation and ownership record. A digital asset and then a Non-Fungible Token (NFT) is created for each registered farm, referred to as farmland NFT It can be noted that the architectural overview and system functionality for creating digital asset of the farms and creating NFTs ( farmland NFT) through blockchain network and determining their value is similar to architecture disclosed by the Applicant in Applicant's Indian patent application No: 202321037342 filed on 30 May 2023 titled 'ESTIMATING FLEXIBLE CREDIT ELIGIBILITY AND DISBURSEMENT SCHEDULE USING NON-FUNGIBLE TOKENS (NFTs) OF AGRICULTURAL ASSETS' and not repeated for brevity.

For each farm f1 to fn, a FSI is computed along with the FVF, the Re-CoF, and the LASOL, which are further mapped to relevant one or more SDGs, and SDG indicators using a FSI to SDG matrix and FSI to SDG indicator matrix generated using agri-knowledge database. Further, certificates are generated for the farmland comprising a FVF certificate, a Re-CoF certificate, and a LASOL certificate the estimated FVF, the estimated Re-CoF, and the estimated LASOL Each of the plurality of certificates is approved by a certifying body with a unique certificate ID. The certifying body can be an appropriate regional or national or international certifying body or agency mentioned in agri-knowledge graph base.

Further, using a standard NFT generation process the FSI is tokenized into a parent FSI NFT, a FVF NFT, a RE-CoF NFT, and a LASOL NFT, in addition to a farmland NFT created for the farmland using applicant's Indian patent application No: 202321037342. The parent FSI NFT, the FVF NFT , the Re-CoF NFT, the LASOL NFT, and the farmland NFT is open for trade on blockchain based transactions. The one or more relevant SDGs mapping to the FVF , the Re-CoF, and the LASOL factor during valuation of the NFT.

Existing, blockchain-based systems and mechanisms are used to create the NFTs of various sustainability indicators are used. A Blockchain-based distributed ledger is used to carry out and maintain NFT-related transactions. Known in the art computer hardware and network related components of distributed ledger are used to support block chain based actions of the system 100. Distributed databases to store and handle smart contracts. Digital Asset/product Server, Asset/product valuation server, NFT wallet and exchange server, NFT buyer/leasing node, financial transaction server as disclosed in applicant's Indian patent application No: 202321037342 are used as the infrastructure for digital asset and NFT generation for enabling transactions.

**Farm Sustainability index and FSI Indicators:** Managing sustainability of Farm is very critical to utilize the natural resources that balance economic, social, and environment considerations to meet the needs of present and future generations. Farm sustainability involves adopting sustainable farm practices and technologies that maintain or enhance the productive capacity of land while protecting and improving its natural resources, such as soil health, water, and biodiversity. Assessment and tokenization of Farm sustainability index is highly useful to the various decision makers for taking right decisions in which impacts farm sustainability and to preserve natural resource of the farm.

The biophysical component of the farm is essential to maintain healthy soil, healthy crops, quality produce and sustainable yield. The core sustainability indicators are used to assess the economic, environment, and social health of a farm constructed using the following proxy indicators (i) Farming Viability of Farm (FVF), (ii) Re-Carbonizing of farm (Re-CoF) and (iii) Landholding for social livelihood (LASOL). These indicators are derived from the satellite remotes sensing and ground data on farm historical information to understand the present status of farm sustainability via the plurality of historical and current parameters related to the plurality of indicators sourced by the farm database using various sources such as the plurality of sensors deployed on the farmland, satellite imagery and external databases.

The farm sustainability index helps to generate various insights of the farm which will provide valuable suggestions to manage long-term sustainability of the farm.

**Farm Sustainability Index (FSI) and SDG goals:** The FSI support to achieve multiple objectives broadly in the economic, environment, social, nutritional, healthy and food security. Sustainability index is an approach that contributes directly to the achievement of nine of the SDG goals. The sustainable index of the farm has been constructed using the indicators and its parameters derived from the satellite remote sensing and ground data.

The following three indicators are guiding principles to the farm based on the sustainable practices adopted and inheritance of the farm closely related to Agriculture: (1) improving efficiency in the use of resources to produce more with less (FVF), (2) conserving, protecting, and enhancing farm natural ecosystems (Re-CoF), (3) Protecting and improving rural livelihoods, equity, and social viability (LASOL). It has been constructed using a multi-technology approach and multi-dimensional, interdisciplinary in nature. FSI is a key indicator which supports farm owners in reducing production costs, translating into greater income, economic stability, and resilience. FSI guide the farm owners to mitigate against climate change, reduces the emission of greenhouse gases by promoting carbon smart - integrated production systems at farm level to scale up SDG goals.

- SDG 1 (No Poverty): Rural people make up 70% of the world's extreme poor. So, agriculture can contribute more to reducing poverty than any other sector.
- Goal 2. The contribution that agriculture can make to Agenda 2030 relates to
- SDG 4 (Quality Education): Agricultural extension enables farmers' access to the skills, tools, inputs, and knowledge they need.
- SDG 5 (Gender Equality): Women farmers produce 20-30% less than their male counterparts, mostly on account of differences in their access to and use of resources. Because women produce over half the food worldwide, bridging this gap could reduce global hunger.
- SDG 6 (Clean Water and Sanitation): By 2030, the global demand for water will have doubled, with agriculture alone requiring more than what can be sustained to feed the world (even before domestic and industrial needs are met).
- SDG 7 (Affordable and Clean Energy): By 2030, the demand for energy will have doubled, mostly on account of developing countries. More crops are likely to be grown for use as biofuels, doubling or perhaps even tripling as a proportion of total use.
- SDG 8 (Decent Work and Economic Growth): In rural areas, agriculture can be an engine of employment and pro-poor economic growth.
- SDG 12 (Responsible Consumption and Production): Average consumption per capita is expected to grow through 2030, even if about one third of what food is produced goes to waste.
- SDG 13 (Climate Action): By 2030, agriculture's carbon mitigation potential could reach as much as 7.5% of total global emissions, depending on the price of carbon and adoption of agricultural productivity measures.
- SDG 15 (Life on Land): Improving the efficiency of farmland can help meet the demand for food and curtail the conversion of natural habitats and forests for additional cultivation.
- To this list one could add SDG 11 (Sustainable Cities and Communities) in consideration of the role of urban and peri-urban agriculture and SDG 14 (Life Below Water) if by agriculture we also mean aquaculture and mariculture).

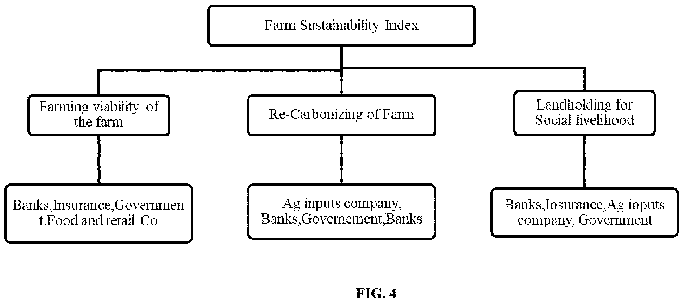

**NFT -Farm Substantiality Index:** Tokenizing the farm sustainability indicators more accurately and issuing certificates is essential to protect the sustainability state of a farm securely through block chain technology. Tokenizing the sustainability state of the farm is assessed by the multi-technology approach to provide a way to utilize by the ecosystem partners rights to obtain sustainability dimension of the farm to direct them for sustainable procurement, assessing climate risk, sustainable production, under write loan & insurance, and sustainable management of farm resources etc. An example mapping of FSI components (FVF, Re-CoF, LASOL) to various related business, trading, and commercial organizations is as shown in FIG. 4

**Farming Viability of the Farm (FVF) Certificate:** Farming Viability of the Farm are the key indicators to measure a farm sustainability and it addresses dual objectives like economic and social viability of farm such as the cropping intensity, crop health risk, farm productivity and farm resilience The FVF is commonly linked to the deforestation and associated losses of ecosystem services and biodiversity. The volume of agriculture produce output at farm level assessed based on the historical information of the farm acquired through multi-technology approach. Issuing certificate of NFT of FVF ensures secure & transparency of farm sustainability which builds the trust among end users and certificate of indicators will help NFT owner to get better services from the bank/insurance, better prices for their credentials.

**Re-Carbonization of Farm (Re-CoF) Certificate:** The effectiveness of decarbonizing of farms assessed by the practices adopted since past 5 years to simultaneously increase carbon inputs and reduce carbon outputs. For example, no-tillage, conservation tillage, reduced or minimum tillage, and superficial tillage. Cover crops, Biochar amendment etc. Re-COF issued certificate as NFT of farm is proposed based on three parameters such as regenerative agriculture practices, soil organic matter ratio and biodiversity risk of the farm and the natural resource available around the ecosystem of the farm. The environmental Sustainability indicators of farms have been assessed based on judicious use of natural resources, reduction of the GHGs and increasing the soil carbon. Finally, Re-CoF of the farm is calculated by weighted sum of Regenerative Agriculture Practice, Soil Organic Matter Ratio and Biodiversity risk of the farm. The proposed method ensures that all the static and dynamic components are considered for assessing the Re-CoF indicator.

**Land holding for social livelihood (LASOL)Certificate:** Method for assessment of NFT of the LASOL farm art is carried out by considering the farmland size, farmland tenure and type of farmland (type of farming) practiced by the farmers followed on the agricultural land during the season. Method and system of sustainability of farm relates to the quality of life of those who holds farm and live on the farm, as well as those in the surrounding communities.

**Market place for NFT's-:** The Market place is an emerging form of art where the aesthetic feels of the farm either its layout or the aggregation of buyers in the platform online for selling and reselling of such sustainable farm assets. Besides above sustainable farm as an asset, other sustainability indicators of the farm like Farming Viability of the Farm, Re-Carbonization of soil, land holding for social livelihood as digital certificate and NFTs to buy and sell online which can be added to this flexible method and system giving an easy extension. These NFTs are created in a distributed ledger-based blockchain network where smart contract for each NFT includes the metadata and other details associated with the terms of usage, thresholds, if any, conditions, etc.

These NFTs are allocated to a virtually to the stakeholders in the marketplace for secure based transactions. Further, the system 100 accessing farm sustainability indicators issued certificate to the specific end users like banks, insurance, retail companies to under write, procure their produce online.

Thus, the system 100 addresses the urgent need to integrate climate change concerns into enhancing the provision of ecosystem services through better stewardship of soil and water resources while ensuring high levels of productivity decisions made at farm level, such as specialization, allocation of resources and management of production processes, which are crucial in determining sustainable food production and nutritional security.

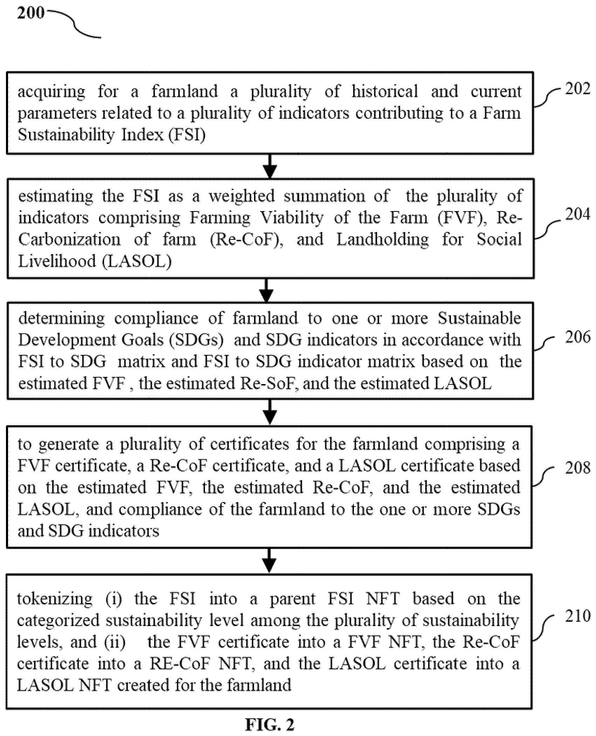

FIG. 2 is a flow diagram illustrating a method 200 for appropriate regional or national or international certifying body or agency mentioned in agri knowledge graph base, using the system depicted in FIG. 1A and 1B, in accordance with some embodiments of the present disclosure.

In an embodiment, the system 100 comprises one or more data storage devices or the memory 102 operatively coupled to the processor(s) 104 and is configured to store instructions for execution of steps of the method 200 by the processor(s) or one or more hardware processors 104. The steps of the method 200 of the present disclosure will now be explained with reference to the components or blocks of the system 100 as depicted in FIG. 1A and 1B and the steps of flow diagram as depicted in FIG. 2. Although process steps, method steps, techniques or the like may be described in a sequential order, such processes, methods, and techniques may be configured to work in alternate orders. In other words, any sequence or order of steps that may be described does not necessarily indicate a requirement that the steps be performed in that order. The steps of processes described herein may be performed in any order practical. Further, some steps may be performed simultaneously.

Referring to the steps of the method 200, at step 202 of the method 200, the one or more hardware processors 104 are configured by the instructions to acquire, for a farmland, a plurality of historical and current parameters related to a plurality of indicators contributing to a Farm Sustainability Index (FSI). The parameters are acquired from the farm database captured via the plurality of sources as described in FIG. 1B.

At step 204 of the method 200, the one or more hardware processors 104 are configured by the instructions to estimate the FSI as a weighted summation of the plurality factors of FSI comprising Farming Viability of the Farm (FVF), Re-Carbonization of farm (Re-CoF), and Landholding for Social Livelihood (LASOL).

It can be noted that each of the FSI, the FVF, the Re-CoF, and the LASOL is estimated in terms of level achieved by the farm for that FSI, or the FSI indicator or the FSI sub-indicators. These levels are categorized as level I, level II, and level III with each level indicating percentage achievement of the farm associated with the FSI, FSI indicator or FSI sub indicators. For example the FVF indicator discussed below can be categorized into three levels Viable (75-100%), moderately viable (50-75%) and unviable (<50%) in the percentage. The Re-carbonization (Re-CoF) of farm indicators of farm would be determined based on the adoption of Regenerative Agriculture Practices and SOMR of the farm and issued a certificate as Carbonized (75-100%), moderately carbonized (50-75%) and uncarbonized (<50%). The Land holding for sustainable livelihood of farm would be determined based on the farm size, irrigation source and land ownership of the farm. The LASOL certificate would be issued to the farm as certificate as High (75-100%), medium (50-75%), Low(<50%).

**The FVF:** is estimated as weighted summation of FSI sub-indicators comprising: Cropping Intensity (CI), and a Crop Health Risk (CHR), Farm Productivity (FP), and Farm Resilience Capacity (FRC). Each of the CI, CHR, FP and FRC is estimated and categorized into a performance level among a plurality of performance levels by processing the plurality of historical and current parameters associated with one or more factors among the plurality of indicators contributing to the FVF. The data required for the processing is acquired at step 202 from the farm database.

The FVF indicator is defined as "farming viability of the farm "which estimate the economic viability of the farm. At farm level the productivity reflects the technology and production processes for given agri-climatic zone conditions. The FVF is commonly linked to the deforestation and associated losses of ecosystem services and biodiversity. The volume of agriculture produce output at farm level assessed based on the historical information of the farm acquired through multi-technology approach. The following parameters are considered to calculate FVF (i) cropping intensity (CI), (ii) Crop Health risk (CHR), (iii) farm productivity (FP) and (iv) farm resilience capacity (FRC).

**i) Cropping intensity (CI):** This parameter describes the impacts of crop intensification on the farm. The cropping intensity is the number of times a crop is planted per year in each farm to enhance productivity or profitability per unit of land area. The cropping intensity of the farm is estimated using multi date sentinel-1,2 MODIS satellite remote sensing, IoT sensor and the ground data to estimate the cropping intensity of farm. It refers to raising several crops from the same field during one agricultural year; it can be expressed through a formula.

$$\textit{Cropping Intensity} = \text{(Gross Cropped Area/Net Sown Area)} \times 100.$$

**Table 1**

| S.No | Category | Range (%) | Level |
|------|----------|-----------|-------|
| 1 | Low | <125 | I |
| 2 | Medium | 150-175% | II |
| 3 | High | >175% | III |

*E.g. For e.g. if a farmer has 100 hectares (ha) area of land and in the kharif season, he cultivates 90 ha of area and in Rabi 40 ha area and in Zaid 10 ha of area. Thus, Gross sown area = 150 acre, which means that the farmer utilized the total cultivated land 1.5 times or 150% which is termed as the cropping intensity*

**ii. Crop Health Risk (CHR):** This parameter describes the extent, duration, and timing of average vegetative cover on land during the last 5 years. This has been analyzed by using satellite remote sensing derived indicators like NDVI to measure average crop health indices. This risk can be assessed by looking into the vegetation condition index of the farm. The crop health risk could be assessed based on the average VCI value obtained for the past 5 yrs. Crop health risk is classified into the range of Vegetation Condition Index (VCI) compares the current Normalized Difference Vegetation Index (NDVI) to the range of values observed in the same period in the previous 3 years. The VCI is expressed in % and gives an idea where the observed value is situated between the extreme values (minimum and maximum) in the previous years.

**Table 2**

| S.No | Category | Range | Level |
|------|----------|-------|-------|
| 1 | Low | 0.2-0.4 | I |
| 2 | Medium | 0.4-0.7 | II |
| 3 | High | >0.7 | III |

**iii. Farm Productivity (FP):** This parameter describes current yields, yield trends, and the ratio of actual to potential yield of crops grown on the farm. It is measured through agricultural value of outputs obtained on each hectare (ha)of land with the help of remote sensing, IOT sensor and other ground data. The unit of measurement of the farm by "Sustainable Yield Index (SYI). Sustainable Yield Index of farm = The variation in mean crop yield of each farm compared with the maximum observed crop equivalent yield over the years and expressed as sustainability yield index (SYI).

$$SYI \qquad = (Y\text{-}Sd)/Ymax$$

*Where*

*SYI = sustainable yield index*
*Y = average yield over years*
*Sd = standard deviation*
*Ymax = maximum yield obtained in any of the year (5 years)*

The farm productivity can be measured and categorized in to three categories/ levels.

**Table 3**

| S.No | Category | Level |
|------|----------|-------|
| 1 | Low | I |
| 2 | Medium | II |
| 3 | High | III |

**iv. Farm Resilience Capacity (FRC):** This parameter describes the resilience of the farm refers to the capacity of farm to deal with shocks and stresses to persist and continue to withstand such shock economic and social viability. Frequency of occurrence of identified localized risks of hailstorm, landslide, inundation, cloudburst, and natural fire due to lightening affecting isolated farms is analyzed using remote sensing, IOT sensor and other ground data collected from the knowledge data base and to calculate the farm resilience capacity also this table update periodically and dynamically based on the occurrence.

**Table 4**

| S.No | Category | Range | Level |
|------|----------|-------|-------|
| 1 | Low | If the frequency of the any calamity occurrence is < 5 in the 5 years (yrs) | I |
| 2 | Medium | If the frequency of the any calamity occurrence is (5-7 or yearly once in the last 5 yrs ) | II |
| 3 | High | If the frequency of the any calamity occurrence is > 3/year or >10 times in the last 5 yrs | III |

The data collected from the farm is used to determine the viability of the farm - based on the indicators such as cropping intensity, crop health risk, farm productivity and farm resilience etc.

a.

$$FVF\ score = f\{CI, CHR, FP\ and\ FRC\} X100$$

b. Weightage (1-3) - CI (High, Medium, low), CHR (high, medium. low), FP (High, medium, low),.FRC( High. Medium, Low)
c. Weight for each attribute - 3,2,1 (respectively)

The FVF would be determined based on the farm production and productivity indicators of the farm and issued a certificate as Viable (75-100), moderately viable (50-75) and unviable (<50%) in the percentage.
**The Re-CoF:** is estimated as weighted summation of the FSI sub-indicators comprising a Regenerative Agriculture practice (RAP), a Soil Organic Matter Ratio (SOMR), and a Biodiversity Risk (BR) of the farmland. Each of the RAP, the SOMR and the BR is estimated and categorized into the performance level from among the plurality of performance levels by processing the plurality of historical and current parameters contributing to the Re-CoF.

Re-Carbonization of soil is the key parameter to estimate farm sustainability of farm. The effectiveness of decarbonizing of the farm is assessed by the practices adopted simultaneously increase carbon inputs and reduce carbon outputs. For example, no-tillage, conservation tillage, reduced or minimum tillage, and superficial tillage. Cover crops, Biochar amendment etc. The Carbon-rich soils create higher yields and require re-carbonizing inputs fertilizers and pesticides, thus saving cost of cultivation and judicious use of resources like water, nutrient, and biodiversity of farm. Increasing carbon also allows the soil to hold much more water and its critical to keep farms resilient and healthy through droughts and mitigate calamity risks'-re-carbonizing of soil is a natural process can be efficiently managed by farmers in several ways to improve the health of sustainable farms and measured using the historical information derived of the farm from the satellite remote sensing with the help of Sentinel-1,2, and MODIS data. The following parameters has been assessed to arrive Re-CoF of the farm sustainability.

i) **Regenerative Agriculture practice (RAP):** This parameter describes the measurement of dynamic adoption of regenerative agriculture practices using the non-invasive and invasive methods. The RAP such as conservation tillage, cover cropping, and crop rotation can improve soil health by reducing erosion, increasing organic matter, and enhancing soil structure. Crop specific and agroclimatic zone wise regenerative agriculture knowledge base stored in the system. Assessing adoption of regenerative agricultural practices, including Zero tillage, Cover cropping, mulching, cropping pattern using remote sensing, IoT sensor and other ground data. The adoption quotient is monitored on real time basis during crop growth stage and calculated RAP AQ.

*RAP Adoption quotient = (Total no of RAP adopted/No of recommended RAP)\*100*

**Table 5**

| S.No | Category | Range | Level |
|------|----------|-------|-------|
| 1 | Low | <50 % | I |
| 2 | Medium | 50-75% | II |
| 3 | High | >75% | III |

ii) **Soil organic matter ratio (SOMR):** This parameter describes as Soil organic matter content of the soil. Soil fertility is important character for sustainable farm because fertile soils supply enough nutrients for crop development, making plants more vigorous and resistant to crop diseases and pest attacks. Soil sampling is done at the rate of one sample for every two-hectare area. However, remote sensing enabled grid sampling should be collected for a maximum area of five hectares. For soil organic matter survey work, samples are collected from a soil profile representative to the soil of the surrounding area before and end of the season.

The satellite Landsat 8 have been also used to measure the SOM level at the farm level. Most of the productive agricultural soils have SOM ranges between 3 and 6% organic matter is optimum.

**Table 6**

| S.No | Category | Range (%) | Level |
|------|----------|-----------|-------|
| 1 | Low | <3 | I |
| 2 | Medium | 3- 6 | II |
| 3 | High | >6 | III |

iii) **Biodiversity risk:** This parameter describes to assessed by understanding whether farmers adopt biodiversity friendly practice by the farm at ecosystem. It is assessed by understanding the agroecological infrastructure present in and around the farm and Agri allied activities including agroforestry, livestock farming etc., using the plurality of Farm natural resources, especially those of waterbody, tree ecosystem and animal diversity, vegetation cover, climate and ecosystem services are fundamental for the structure to function of agricultural systems and for social and environmental sustainability of farm captured through the plurality of sensors such as but not limited to satellite based remote sensing ,GPS enabled IoT devices, mobile and web applications and so on.

The farm must have at least 10-15% of the holding area left for natural or diverse vegetation, trees, hedges, wetland is classified as high biodiversity (3) <=10 % (Medium) and <5 low.

**Table 7**

| S.No | Category | Range (%) | Level |
|---|---|---|---|
| 1 | Low | <5 | I |
| 2 | Medium | 5-10 | II |
| 3 | High | >10 | III |

**Re-CoF** of the farm would be assessed as below: The remote sensing satellites and the GIS platform would collect the images of the farm to derive historical information of the soil nutrient status, biodiversity risk, and sustainable practices followed since last 5 years in the farm, if it is a satellite platform, then the image having bare soil would be downloaded or acquired.

a.

$$Re\text{-}CoF \text{ score} = f\{RAP, SOMR \text{ and Biodiversity risk}\} \times 100$$

b. Weightage (1-3) - Re-CoF(High, Medium, low),SOMR(high, medium. low), BDR (High, medium, low).
c. Weight for each attribute - 3,2,1 (respectively)

The Re-carbonization of farm indicators would be determined based on the adoption of Regenerative Agriculture Practices and SOMR of the farm and issued a certificate as Carbonized (75-100), moderately carbonized (50-75) and uncarbonized (<50%).

**The LASOL:** is estimated as weighted summation FSI sub-indicators comprising: farmland Size, farmland tenure, and type of farmland, each is estimated and categorized into the performance levels from among the plurality of performance levels by processing the plurality of historical and current parameters contributing to the LASOL.
i) **Farmland size:** This parameter describes the size of the farm owned by the individual. This can be assessed with the help of satellite remote sensing and other ground data for accurately. Identification of farm size is complex due to the diversity of smallholder farming systems, constrained plot size, crop heterogeneity etc. However, such mapping remains the foremost step towards monitoring sustainability farm. Farm *area* can be estimated in a very concise method and in very less time with maximum accuracy and categorized as per the standard followed by the respective national/regional scale. In one implementation, applicant's patent application No: 202221013927 filed in India on 15 March 2022 titled 'METHOD AND SYSTEM FOR DETECTION OF FIELD BOUNDARIES USING COARSE RESOLUTION SATELLITE DATA AND GIS' is used for farm size determination. However, is not explained herein for brevity.

**Table 8**

| S.No | Category | Range (ha) | Level |
|---|---|---|---|
| 1 | Small | <2.5 | I |
| 2 | Medium | 2.5-5 | II |
| 3 | Large | >5 | III |

**ii) Farmland tenure:** This parameter describes the legal ownership of land possession by the farmer. Farmland tenure can also be assessed by using invasive and non-invasive method and confirm the secure tenure right to land. For example, in India, the government uses 'Bhulekh initiative,' a remote sensing-based land ownership identification method. This measures the ownership of farm or secure to use of farm through formal document issued by land registry/cadastral map and to identify the owned/leased/government land.

**Table 9**

| S.No | Category | Level |
|---|---|---|
| 1 | Owned | I |
| 2 | Partially owned | II |
| 3 | Leased | III |

iii) **Type of farmland:** This parameter describes to identify the farm whether Irrigated or Non-Irrigated using satellite remote sensing, IOT sensor and ground data. With the help of satellite remote sensing able to estimate the irrigation /non -irrigated status of the farm and crops grown during the season.

**Table 10**

| S.No | Category (type of farmland) | Level |
|------|-----------------------------|-------|
| 1 | Dry land | I |
| 2 | Partial irrigated land | II |
| 3 | Irrigated land | III |

The landholding for sustainable livelihood indicators would be assessed. The remote sensing and GIS platform would collect the farm size, farm tenure and irrigation source images of the farm. If it is a satellite platform, then the image is downloaded or acquired.

$$\text{LASOL score} = f \{\text{Farmland size, type of farmland and Farmland tenure}\}$$

Weightage (1-3)-LS (High, Medium, low), Water source (high, medium. low),
Farmland tenure (High, medium, low).
Weight for each attribute - 3,2,1 (respectively)

The Land holding for sustainable livelihood of the farm would be determined based on farm size, irrigation source and land ownership of the farm. The LASOL certificate would be issued to the farm as certificate as High, low, and medium

**Farm Sustainability Index:** The objective of the system 100 is to estimate the Sustainability Index of the farm at the end of the season. This is done based on calculating index value which is a combination (sum of) of three indicators multiplied by weightage for FVF, Re-CoF and LASOL The score is given by:

$$\textbf{\textit{Farm Sustainability Index (FSI)}}$$

$$= (\text{FVF} * \text{w1} + \text{Re} - \text{CoF} * \text{w2} + \text{LASOL} * \text{w3}) / \sum_{i=1}^{3} wi$$

where, w1, w2, w3 are weightage for Farming viability of the farm, Re-carbonization of farm, and Landholding for social livelihood respectively. The aim of the sustainable farming is focused to produce more with less farming. Thus, more weightages will be given to Re-CoF as farm resources like organic carbon, nutrient status is very important hence 50% (Re-CoF), 30%(FVF). 20%(LASOL).

**Table 11**

| | | | |
|-------|---------|----|---|
| FVF | 85 | w1 | 3 |
| Re-CoF | 85 | w2 | 4 |
| LASOL | 50 | w3 | 5 |
| FSI | 70.41667 | | |

The final sustainability index of the farm obtained in the percentage is used to classify the farm as Sustainable, moderately sustainable, and Unsustainable used for farm decision support which are based on the specific characteristics and issues of each farm. Once FSI is computed by summing the indicators, the farmland is categorized into one of a plurality of sustainability levels based on percentage value of the estimated FSI:

- Sustainable- Level III
- Moderately sustainable- Level II
- Unsustainable- Level I

At step 206 of the method 200, the one or more hardware processors 104 are configured by the instructions to determining (206), by the one or more processors, compliance of farmland to one or more Sustainable Development Goals (SDGs) and SDG indicators using a FSI to SDG matrix and FSI to SDG indicator matrix based on the estimated FSI, the estimated FVF, the estimated Re-CoF, and the estimated LASOL the goal matrix and the indicator matrix is generated from definitions of the plurality of SDGs and the SDG indicators available in an agri-knowledge graph database, wherein changes to the definitions are updated dynamically in the agri-knowledge database. The definitions are updated based on changes in the definition of the SDGs (https://sdgs.un.org/goals) and SDG indicators (https://unstats.un.org/sdgs/indicators/indicators-list/) as accepted internationally.

**Table 12**

| FSI and SDG Matrix | | |
|---|---|---|
| | Direct | Indirect |
| FSI | SDG1, SDG-2, SDG-3, SDG-6, SDG-7, SDG-8, SDG-10, SDG-12, SDG-13, SDG-15 | SDG-4, SDG-5, SDG-6, SDG-8, SDG-10, SDG-12, SDG-15 |
| FYF | SDG1, SDG-2, SDG-6, SDG-12 | SDG-1, SDG-2, SDG-3, SDG-6, SDG-8, SDG-12 |
| Re-CoF | SDG2, SDG-5, SDG-6, SDG-7, SDG-13 | SDG-3, SDG-7, SDG-12, SDG-13, SDG-15 |
| LASOL | SDG4, SDG-5, SDG-6, SDG-7 | SDG-10, SDG-11, SDG-12, |

The mapping of proposed indices to one or more UN SDG indicators is performed in a weighted manner, all the weightages are initialized to 1. These weights can be changed later by subject matter experts or based on the varying influence of a particular index on one or more SDG indicators.

**Table 13**

| (FSI to SDG- INDICATORS MATRIX) | | |
|---|---|---|
| Proposed indices | Direct SDG indicators | SDG indirect indicators |
| FSI | 1.1,1.3,2.1,2.3,2.4,3.9,3D,6.4,6.5,7.1,7.3,8.4,8.5,10.1,10.2,10.3 ,12.1,12.2,12.3,13.1,13.2,15.3 | 1.2,1.5,2.2,2.5,2A,3.1,3.2,4.4,4.7,5A,5B,6.6,6.3,8.3,8.4,10.5,10.4,12.2,12.3,12.7,15.1,15.2,15.5,15.9 |
| FYF | 1.1,1.3,1.5,2.3,2.4,6.4,6.6,12.2, 12.3 | , , 1B,2.1,2.5,3.1,3.2,6.5,12.6,12.7, |
| Re-CoF | 2.1,2.3,5B,6.4,6.5,7.2,13.1,13.2 , | 3.1,3.2,6.6,7.1,13.3,15.5 |
| LASOL | 4.4,5.4,5.5,6.4,6.5,7.1,7.2 | 10.2,10.7,10.4,11A,12.3,12.4,12. 7 |

A snippet of SDG indicators used in the Table 13 is listed below:

**Goal 1: End poverty in all its forms everywhere**

1.1 By 2030, eradicate extreme poverty for all people everywhere, currently measured as people living on less than $2.15 a day

1.2 By 2030, reduce at least by half the proportion of men, women and children of all ages living in poverty in all its dimensions according to national definitions 1.3 Implement nationally appropriate social protection systems and measures for all, including floors, and by 2030 achieve substantial coverage of the poor and the vulnerable

1.4 By 2030, ensure that all men and women, in particular the poor and the vulnerable, have equal rights to economic resources, as well as access to basic services, ownership and control over land and other forms of property, inheritance, natural resources, appropriate new technology and financial services, including microfinance

1.5 By 2030, build the resilience of the poor and those in vulnerable situations and reduce their exposure and vulnerability to climate-related extreme events and other economic, social, and environmental shocks and disasters

1.A Ensure significant mobilization of resources from a variety of sources, including through enhanced development cooperation, in order to provide adequate and predictable means for developing countries, in particular least developed countries, to implement programs and policies to end poverty in all its dimensions
1.B Create sound policy frameworks at the national, regional, and international levels, based on pro-poor and gender-sensitive development strategies, to support accelerated investment in poverty eradication actions

**Goal 2: Zero Hunger**

2.1 By 2030, end hunger and ensure access by all people, in particular the poor and people in vulnerable situations, including infants, to safe, nutritious, and sufficient food all year round.

2.2 By 2030, end all forms of malnutrition, including achieving, by 2025, the internationally agreed targets on stunting and wasting in children under 5 years of age, and address the nutritional needs of adolescent girls, pregnant and lactating women, and older persons.

2.3 By 2030, double the agricultural productivity and incomes of small-scale food producers, in particular women, indigenous peoples, family farmers, pastoralists and fishers, including through secure and equal access to land, other productive resources and inputs, knowledge, financial services, markets and opportunities for value addition and non-farm employment.

2.4 By 2030, ensure sustainable food production systems and implement resilient agricultural practices that increase productivity and production, that help maintain ecosystems, that strengthen capacity for adaptation to climate change, extreme weather, drought, flooding, and other disasters and that progressively improve land and soil quality.

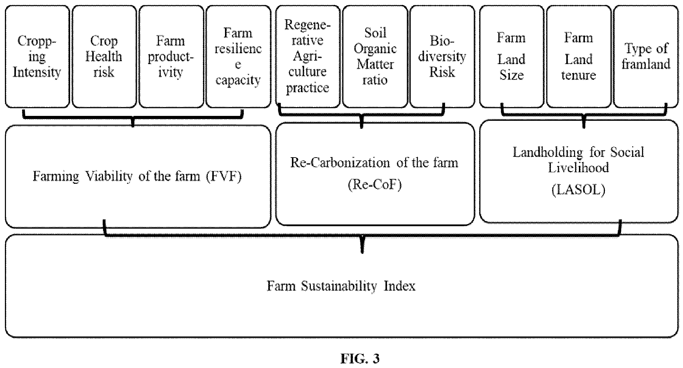

For example, FVF is a dynamic value calculated based on various sub-indicators or farm level parameters. Hence, depending on which farm-level parameters have been positively derived from the farm, the scoring of the FVF will vary. Similarly based on the values of these farm parameters, then particular associated linkage in the SDG mapping will become active, and hence that particular SDG goal compliance will be active. Hence, it means that FVF is not rigidly mapped to the compliances of SDG-2, SDG-5, SDG-6, SDG-7, SDG-13, and so on, and varies dynamically. An example compliance mapping in shown in FIG. 3.

SDG compliance (Table 12) and SDG indicators compliance matrix (Table 13) is used a scale to estimate achieving sustainability goal by the farmer as well as ecosystem partners. The score mentioned in that table is to arrive a sample score of the farm, as per the above FSI score the farm is classified as moderately sustainable.

Because of this specificity, if an entity such as a company dealing in environmental benefits of the farming can claim the compliances to say the SDG-2, SDG-5, SDG-6, SDG-7, SDG-13 associated with FVF.

FVF is contributing to the SDG-2 and all of these parameters contributing directly and indirectly to the SDG indicators are mentioned in the matrix. For example, ae big potato chip food processor wants to buy potato from a farm which is compliant to SDG 2 and in that context FSI will map to SDG indicators which also has direct and indirect relationship to achieve SDG indicators by the procurer and farmer. This way compliance to FSI means compliance to SDGs, but FSI gives additional value by being compliant to various indicators of other SDGs too. FSI provides granular level of compliances in terms of different levels. These levels vary in terms of full association to SDG indicators hence it gives a control to the food processor to procure their potato at the farms which are complaint at a particular FSI level to achieve high sustainability goals.

At step 208 of the method 200, the one or more hardware processors 104 are configured by the instructions to generate, by the one or more processors, a plurality of certificates for the farmland comprising a FVF certificate, a Re-CoF certificate, and a LASOL certificate based on the estimated FVF, the estimated Re-CoF, and the estimated LASOL, and compliance of the farmland to the one or more SDGs and SDG indicators. Each of the plurality of certificates is approved by a standard organization with a unique certificate ID. An appropriate regional or national or international certifying body or agency mentioned in agri knowledge graph base can issue/approve the certificate.

The compliance of the farmland to the one or more SDGs is incorporated in the plurality of certificates for external entities for checking the SDG compliance.

FSI is tokenized first to the whole farm and as part of Farm FVF, RE-CoF and LASOL is issued as certificate. The farming viability of farm (FVF) would be determined based on the farm production and productivity indicators of the farm and issued a certificate as Viable (75-100%), moderately viable (50-75%) and unviable (<50%) in the percentage. The Re-carbonization (Re-CoF) of farm indicators of farm would be determined based on the adoption of Regenerative Agriculture Practices and SOMR of the farm and issued a certificate as Carbonized (75-100%), moderately carbonized (50-75%) and uncarbonized (<50%). The Land holding for sustainable livelihood of farm would be determined based on the farm size, irrigation source and land ownership of the farm. The LASOL certificate would be issued to the farm as certificate as High (75-100%), medium (50-75%) Low (<50%).

Each certificate has a bearing of a unique certificate ID, a unique farm ID allotted by regional government or administration, and geographical coordinates (latitude, longitude), date of the generation of the certificates, and the details of current owner of the certificates (such as farmer ID, name, address with zip code, etc.).

Because of the above approach, farmer's sustainable practices and compliances to sustainability goals and indicators gets converted into a globally recognizable certificate, whose benefits can be leveraged by entities dealing with the farmer. Hence, value such created can now be traded across the world and get monetized.

At step 210 of the method 200, the one or more hardware processors 104 are configured by the instructions to tokenizing (i) the FSI into a parent FSI NFT based on the categorized sustainability level among the plurality of sustainability levels, and (ii) the FVF certificate into a FVF NFT, the Re-CoF certificate into a RE-CoF NFT, and the LASOL certificate into a LASOL NFT. Additionally, a farmland NFT, created for the farm can also be available for further trade on blockchain. As mentioned earlier, creating of the farmland NFT is in accordance with Applicant's Indian patent application No: 202321037342. The parent FSI NFT, the FVF NFT, the Re-CoF NFT, the LASOL NFT, and the farmland NFT is open for trade on blockchain based transactions, and wherein the one or more relevant SDGs mapping to the FVF, the Re-CoF, and the LASOL factor during valuation of the NFT.

Metadata of each certificate such as, but not limited to, certificate ID, farm ID, date, current owners, and a digital photo or PDF version of the certificate, is collected and tokenized as NFT in a blockchain based smart contract. Smart contract includes the terms and condition of the creation, usage, activation, deactivation, and transfer to new owner of this certificate.

Steps to create the NFTs are standard and well known, and the method assists converting the FSI based, and SDG aligned Farm-specific FVF, Re-CoF, and LASOL certificates that can be used for generating NFTs.

The written description describes the subject matter herein to enable any person skilled in the art to make and use the embodiments. The scope of the subject matter embodiments is defined by the claims and may include other modifications that occur to those skilled in the art. Such other modifications are intended to be within the scope of the claims if they have similar elements that do not differ from the literal language of the claims or if they include equivalent elements with insubstantial differences from the literal language of the claims.

It is to be understood that the scope of the protection is extended to such a program and in addition to a computer-readable means having a message therein; such computer-readable storage means contain program-code means for implementation of one or more steps of the method, when the program runs on a server or mobile device or any suitable programmable device. The hardware device can be any kind of device which can be programmed including e.g. any kind of computer like a server or a personal computer, or the like, or any combination thereof. The device may also include means which could be e.g. hardware means like e.g. an application-specific integrated circuit (ASIC), a field-programmable gate array (FPGA), or a combination of hardware and software means, e.g. an ASIC and an FPGA, or at least one microprocessor and at least one memory with software processing components located therein. Thus, the means can include both hardware means, and software means. The method embodiments described herein could be implemented in hardware and software. The device may also include software means. Alternatively, the embodiments may be implemented on different hardware devices, e.g. using a plurality of CPUs.

The embodiments herein can comprise hardware and software elements. The embodiments that are implemented in software include but are not limited to, firmware, resident software, microcode, etc. The functions performed by various components described herein may be implemented in other components or combinations of other components. For the purposes of this description, a computer-usable or computer readable medium can be any apparatus that can comprise, store, communicate, propagate, or transport the program for use by or in connection with the instruction execution system, apparatus, or device.

The illustrated steps are set out to explain the exemplary embodiments shown, and it should be anticipated that ongoing technological development will change the manner in which particular functions are performed. These examples are presented herein for purposes of illustration, and not limitation. Further, the boundaries of the functional building blocks have been arbitrarily defined herein for the convenience of the description. Alternative boundaries can be defined so long as the specified functions and relationships thereof are appropriately performed. Alternatives (including equivalents, extensions, variations, deviations, etc., of those described herein) will be apparent to persons skilled in the relevant art(s) based on the teachings contained herein. Such alternatives fall within the scope of the disclosed embodiments. Also, the words "comprising," "having," "containing," and "including," and other similar forms are intended to be equivalent in meaning and be open ended in that an item or items following any one of these words is not meant to be an exhaustive listing of such item or items or meant to be limited to only the listed item or items. It must also be noted that as used herein and in the appended claims, the singular forms "a," "an," and "the" include plural references unless the context clearly dictates otherwise.

Furthermore, one or more computer-readable storage media may be utilized in implementing embodiments consistent with the present disclosure. A computer-readable storage medium refers to any type of physical memory on which information or data readable by a processor may be stored. Thus, a computer-readable storage medium may store instructions for execution by one or more processors, including instructions for causing the processor(s) to perform steps or stages consistent with the embodiments described herein. The term "computer-readable medium" should be understood to include tangible items and exclude carrier waves and transient signals, i.e., be non-transitory. Examples include random access memory (RAM), read-only memory (ROM), volatile memory, nonvolatile memory, hard drives, CD ROMs, DVDs, flash drives, disks, and any other known physical storage media.

It is intended that the disclosure and examples be considered as exemplary only, with a true scope of disclosed embodiments being indicated by the following claims.

**Claims**

1. A processor implemented method (200), the method comprising:

acquiring (202) for a farmland, by one or more hardware processors, a plurality of historical and current parameters related to a plurality of indicators contributing to a Farm Sustainability Index (FSI);
estimating (204), by the one or more hardware processors, the FSI as a weighted summation of the plurality of indicators comprising Farming Viability of the Farm (FVF), Re-Carbonization of farm (Re-CoF), and Landholding for Social Livelihood (LASOL),

wherein the FVF is estimated as weighted summation of Cropping Intensity (CI), Crop Health Risk (CHR), Farm Productivity (FP), and Farm Resilience Capacity (FRC), wherein each of the CI, CHR, FP, and FRC is estimated and categorized into a performance level among a plurality of performance levels by processing the plurality of historical and current parameters contributing to the FVF,
wherein the Re-CoF is estimated as weighted summation of a Regenerative Agriculture practice (RAP), a Soil Organic Matter Ratio (SOMR), and a Biodiversity Risk (BR) of the farmland, wherein each of the RAP, the SOMR, and the BR is estimated and categorized into the performance level from among the plurality of performance levels by processing the plurality of historical and current parameters contributing to the Re-CoF,
wherein the LASOL is estimated as weighted summation of a farmland size, a farmland tenure, and type of the farmland, each estimated and categorized into the performance levels from among the plurality of performance levels by processing the plurality of historical and current parameters contributing to the LASOL, and
wherein the farmland is categorized into one of a plurality of sustainability levels comprising sustainable, moderately sustainable, and unsustainable based on percentage value of the estimated FSI;

determining (206), by the one or more hardware processors, compliance of the farmland to one or more Sustainable Development Goals (SDGs) and SDG indicators using a FSI to SDG matrix and FSI to SDG indicator matrix based on the estimated FSI, the estimated FVF, the estimated Re-CoF, and the estimated LASOL;
generating (208), by the one or more hardware processors, a plurality of certificates for the farmland comprising a FVF certificate, a Re-CoF certificate, and a LASOL certificate based on the estimated FVF, the estimated Re-CoF, and the estimated LASOL, and compliance of the farmland to the one or more SDGs and SDG indicators; and
tokenizing (210), by one or more hardware processors, (i) the FSI into a parent FSI NFT based on the categorized sustainability level among the plurality of sustainability levels, and (ii) the FVF certificate into a FVF NFT, the Re-CoF certificate into a RE-CoF NFT, and the LASOL certificate into a LASOL NFT, wherein the parent FSI NFT, the FVF NFT, the Re-CoF NFT, the LASOL NFT, and the farmland NFT is open for trade on blockchain based transactions.

2. The method of claim 1, wherein the FSI to SDG matrix and the FSI to SDG indicator matrix are generated from definitions of the plurality of SDGs and the SDG indicators available in an agri-knowledge graph database, wherein changes to the definitions are updated dynamically in the agri-knowledge graph database.

3. The method of claim 1, wherein the FSI is mathematically expressed as:

$$Farm\ Sustainability\ Index\ (FSI) = (\ FVF * w1 + Re-CoF * w2 + LASOL * w3)/\ \sum_{i=1}^{3} Wi,$$

wherein w1,w2,w3 are weightages assigned to the FVF, the Re-CoF, and the LASOL.

4. The method of claim 1, wherein the plurality of historical and current parameters related to the plurality of indicators contributing to the FSI are obtained from a plurality of sensors deployed on the farmland, satellite imagery, and external databases.

5. The method of claim 1, wherein approval is obtained for each of the plurality of certificates with a unique certificate ID by a certifying body.

6. A system (100) comprising:

a memory (102) storing instructions;
one or more Input/Output (I/O) interfaces (106); and
one or more hardware processors (104) coupled to the memory (102) via the one or more I/O interfaces (106), wherein the one or more hardware processors (104) are configured by the instructions to:

acquire for a farmland, a plurality of historical and current parameters related to a plurality of indicators contributing to a Farm Sustainability Index (FSI);
estimate the FSI as a weighted summation of the plurality of indicators comprising Farming Viability of the Farm (FVF), Re-Carbonization of farm (Re-CoF), and Landholding for Social Livelihood (LASOL),

wherein the FVF is estimated as weighted summation of Cropping Intensity (CI), a Crop Health Risk (CHR), Farm Productivity (FP), and Farm Resilience Capacity (FRC), wherein each of the CI, CHR, FP and FRC is estimated and categorized into a performance level among a plurality of performance levels by processing the plurality of historical and current parameters contributing to the FVF;
wherein the Re-CoF is estimated as weighted summation of a Regenerative Agriculture practice (RAP), a Soil Organic Matter Ratio (SOMR), and a Biodiversity Risk (BR) of the farmland, wherein each of the RAP, the SOMR and the BR is estimated and categorized into the performance level from among the plurality of performance levels by processing the plurality of historical and current parameters contributing to the Re-CoF;
wherein the LASOL is estimated as weighted summation of a farmland size, a farmland tenure, and a type of farmland, each is estimated and categorized into the performance levels from among the plurality of performance levels by processing the plurality of historical and current parameters contributing to the LASOL; and
wherein the farmland is categorized into one of a plurality of sustainability levels comprising sustainable, moderately sustainable, and unsustainable based on percentage value of the estimated FSI;

determine compliance of the farmland to one or more Sustainable Development Goals (SDGs) and SDG indicators using a FSI to SDG matrix and FSI to SDG indicator matrix based on the estimated FSI, the estimated FVF, the estimated Re-CoF, and the estimated LASOL;
generate a plurality of certificates for the farmland comprising a FVF certificate, a Re-CoF certificate, and a LASOL certificate based on the estimated FVF, the estimated Re-CoF, and the estimated LASOL, and compliance of the farmland to the one or more SDGs and SDG indicators; and
tokenize, (i) the FSI into a parent FSI NFT based on the categorized sustainability level among the plurality of sustainability levels, and (ii) the FVF certificate into a FVF NFT, the Re-CoF certificate into a RE-CoF NFT, and the LASOL certificate into a LASOL NFT, wherein the parent FSI NFT, the FVF NFT, the Re-CoF NFT, the LASOL NFT, and the farmland NFT is open for trade on blockchain based transactions.

7. The system of claim 6, wherein the FSI to SDG matrix and the FSI to SDG indicator matrix are generated from definitions of the plurality of SDGs and the SDG indicators available in an agri-knowledge graph database, wherein changes to the definitions are updated dynamically in the agri-knowledge graph database.

8. The system of claim 6, wherein the FSI is mathematically expressed as:

$$Farm\ Sustainability\ Index\ (FSI) = (\text{FVF} * \text{w1} + \text{Re} - \text{CoF} * \text{w2} + \text{LASOL} * \text{w3}) / \sum_{i=1}^{3} Wi,$$

wherein w1, w2, w3 are weightages assigned to the FVF, the Re-CoF, and the LASOL.

9. The system of claim 6, wherein the plurality of historical and current parameters related to the plurality of indicators contributing to the FSI are obtained from a plurality of sensors deployed on the farmland, satellite imagery and external databases.

10. The system of claim 6, wherein an approval is obtained for each of the plurality of certificates with a unique certificate ID by a certifying body.

11. One or more non-transitory machine-readable information storage mediums comprising one or more instructions which when executed by one or more hardware processors cause:

acquiring for a farmland, a plurality of historical and current parameters related to a plurality of indicators contributing to a Farm Sustainability Index (FSI);
estimating the FSI as a weighted summation of the plurality of indicators comprising Farming Viability of the Farm (FVF), Re-Carbonization of farm (Re-CoF), and Landholding for Social Livelihood (LASOL),

wherein the FVF is estimated as weighted summation of Cropping Intensity (CI), Crop Health Risk (CHR), Farm Productivity (FP), and Farm Resilience Capacity (FRC), wherein each of the CI, CHR, FP, and FRC is estimated and categorized into a performance level among a plurality of performance levels by processing the plurality of historical and current parameters contributing to the FVF,
wherein the Re-CoF is estimated as weighted summation of a Regenerative Agriculture practice (RAP), a Soil Organic Matter Ratio (SOMR), and a Biodiversity Risk (BR) of the farmland, wherein each of the RAP, the SOMR, and the BR is estimated and categorized into the performance level from among the plurality of performance levels by processing the plurality of historical and current parameters contributing to the Re-CoF,
wherein the LASOL is estimated as weighted summation of a farmland size, a farmland tenure, and type of the farmland, each estimated and categorized into the performance levels from among the plurality of performance levels by processing the plurality of historical and current parameters contributing to the LASOL, and
wherein the farmland is categorized into one of a plurality of sustainability levels comprising sustainable, moderately sustainable, and unsustainable based on percentage value of the estimated FSI;

determining compliance of the farmland to one or more Sustainable Development Goals (SDGs) and SDG indicators using a FSI to SDG matrix and FSI to SDG indicator matrix based on the estimated FSI, the estimated FVF, the estimated Re-CoF, and the estimated LASOL;
generating a plurality of certificates for the farmland comprising a FVF certificate, a Re-CoF certificate, and a LASOL certificate based on the estimated FVF, the estimated Re-CoF, and the estimated LASOL, and compliance of the farmland to the one or more SDGs and SDG indicators; and
tokenizing (i) the FSI into a parent FSI NFT based on the categorized sustainability level among the plurality of sustainability levels, and (ii) the FVF certificate into a FVF NFT, the Re-CoF certificate into a RE-CoF NFT, and the LASOL certificate into a LASOL NFT, wherein the parent FSI NFT, the FVF NFT, the Re-CoF NFT, the LASOL NFT, and the farmland NFT is open for trade on blockchain based transactions.

12. The one or more non-transitory machine-readable information storage mediums of claim 11, wherein the FSI to SDG matrix and the FSI to SDG indicator matrix are generated from definitions of the plurality of SDGs and the SDG indicators available in an agri-knowledge graph database, wherein changes to the definitions are updated dynamically in the agri-knowledge graph database.

13. The one or more non-transitory machine-readable information storage mediums of claim 11, wherein the FSI is mathematically expressed as:

$$Farm\ Sustainability\ Index\ (FSI) = (\ FVF * w1\ +\ Re - CoF * w2\ +\ LASOL * w3)/\ \sum_{i=1}^{3} Wi,$$

wherein w1,w2,w3 are weightages assigned to the FVF, the Re-CoF, and the LASOL.

14. The one or more non-transitory machine-readable information storage mediums of claim 11, wherein the plurality of historical and current parameters related to the plurality of indicators contributing to the FSI are obtained from a plurality of sensors deployed on the farmland, satellite imagery, and external databases.

15. The one or more non-transitory machine-readable information storage mediums of claim 11, wherein approval is obtained for each of the plurality of certificates with a unique certificate ID by a certifying body.

System100

Processor(s) 104    I/O Interface(s) 106

Memory 102

Database 108

Modules 110

**FIG. 1A**

EP 4 621 687 A1

sky to earth convergence  multiple tech to generate
farm environment data and parameters

satellite remote sensing, drone

internet of things (IoT), GIS

participatory data from farmer,
field agents, citizen services,

database of historical data, survey, reports

streams/lake
vegetation
well
soil

digital farm

Farm Sustainability Indices (FSIs) generator

1.1

farm database (farm data)

Agri-knowledge graph database

flexible match-making (SDG goal) –at
FSI, SDG indicator, and goal level
1.2

NFT marketplace –

NFT blockchain

2.2

season end indicator linked certificate for a farm

2.1

farm level SDG dashboard & audit records

UN's    SDG linked indicators

UN's SDG

FIG. 1B

search, bid, buy / sell

23

200

acquiring for a farmland a plurality of historical and current parameters related to a plurality of indicators contributing to a Farm Sustainability Index (FSI) — 202

estimating the FSI as a weighted summation of the plurality of indicators comprising Farming Viability of the Farm (FVF), Re-Carbonization of farm (Re-CoF), and Landholding for Social Livelihood (LASOL) — 204

determining compliance of farmland to one or more Sustainable Development Goals (SDGs) and SDG indicators in accordance with FSI to SDG matrix and FSI to SDG indicator matrix based on the estimated FVF , the estimated Re-SoF, and the estimated LASOL — 206

to generate a plurality of certificates for the farmland comprising a FVF certificate, a Re-CoF certificate, and a LASOL certificate based on the estimated FVF, the estimated Re-CoF, and the estimated LASOL, and compliance of the farmland to the one or more SDGs and SDG indicators — 208

tokenizing (i) the FSI into a parent FSI NFT based on the categorized sustainability level among the plurality of sustainability levels, and (ii) the FVF certificate into a FVF NFT, the Re-CoF certificate into a RE-CoF NFT, and the LASOL certificate into a LASOL NFT created for the farmland — 210

FIG. 2

| Cropp-ing Intensity | Crop Health risk | Farm product-ivity | Farm resilienc e capacity | Regene-rative Agri-culture practice | Soil Organic Matter ratio | Bio-diversity Risk | Farm Land Size | Farm Land tenure | Type of framland |
|---|---|---|---|---|---|---|---|---|---|

| Farming Viability of the farm (FVF) | Re-Carbonization of the farm (Re-CoF) | Landholding for Social Livelihood (LASOL) |
|---|---|---|

Farm Sustainability Index

**FIG. 3**

Farm Sustainability Index

Farming viability of the farm

Re-Carbonizing of Farm

Landholding for Social livelihood

Banks,Insurance,Government.Food and retail Co

Ag inputs company, Banks,Governement,Banks

Banks,Insurance,Ag inputs company, Government

**FIG. 4**

Europäisches Patentamt
European Patent Office
Office européen des brevets

# EUROPEAN SEARCH REPORT

**Application Number**

EP 25 16 5145

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| Y | UL HAQ SHAMSHEER ET AL: "Developing a set of indicators to measure sustainability of tea cultivating farms in Rize Province, Turkey", ECOLOGICAL INDICATORS, ELSEVIER, AMSTERDAM, NL, vol. 95, 27 July 2018 (2018-07-27), pages 219-232, XP085486225, ISSN: 1470-160X, DOI: 10.1016/J.ECOLIND.2018.07.041 * abstract * * page 2, column 1 - column 2 * * page 3, column 2 * * page 4, column 2 - page 6, column 2 * * page 7, column 2 * * page 9, column 2 * * page 11, column 2 - page 12, column 2 * * tables 7, 8 * | 1-15 | INV. G06Q30/018 G06Q50/02 H04L9/00 |
| Y | DOS SANTOS RICARDO BORGES ET AL: "Third Party Certification of Agri-Food Supply Chain Using Smart Contracts and Blockchain Tokens", SENSORS, vol. 21, no. 16, 6 August 2021 (2021-08-06), page 5307, XP093071468, DOI: 10.3390/s21165307 * abstract * * Sections 1.1-1.4 * * Section 2.5 * * Section 2.7 * * Sections 4.1-4.3 * * Sections 5-6 * -/-- | 1-15 | TECHNICAL FIELDS SEARCHED (IPC) G06Q H04L |

The present search report has been drawn up for all claims

| Place of search | Date of completion of the search | Examiner |
|---|---|---|
| Munich | 23 June 2025 | Bharucha, Zubin |

EPO FORM 1503 03.82 (P04C01)

page 1 of 2

| | Europäisches Patentamt European Patent Office Office européen des brevets | **EUROPEAN SEARCH REPORT** | **Application Number** EP 25 16 5145 |
|---|---|---|---|

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | US 2021/360866 A1 (DUQUETTE TAMMY [US] ET AL) 25 November 2021 (2021-11-25) <br> * paragraph [0010] * <br> * paragraph [0020] * <br> * paragraph [0164] * <br> * paragraph [0167] * <br> - - - - - | 1-15 | |
| | | | **TECHNICAL FIELDS SEARCHED (IPC)** |

The present search report has been drawn up for all claims

| Place of search | Date of completion of the search | Examiner |
|---|---|---|
| Munich | 23 June 2025 | Bharucha, Zubin |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 25 16 5145

This annex lists the patent family members relating to the patent documents cited in the above-mentioned European search report.
The members are as contained in the European Patent Office EDP file on
The European Patent Office is in no way liable for these particulars which are merely given for the purpose of information.

23-06-2025

| Patent document cited in search report | Publication date | Patent family member(s) | Publication date |
|---|---|---|---|
| US 2021360866 A1 | 25-11-2021 | AU 2017225697 A1 | 20-09-2018 |
| | | AU 2023200382 A1 | 23-02-2023 |
| | | BR 112018067709 A2 | 08-01-2019 |
| | | CA 3015018 A1 | 08-09-2017 |
| | | EP 3423998 A1 | 09-01-2019 |
| | | EP 3996013 A1 | 11-05-2022 |
| | | RU 2018134039 A | 06-04-2020 |
| | | UA 126899 C2 | 22-02-2023 |
| | | US 2019090432 A1 | 28-03-2019 |
| | | US 2021360866 A1 | 25-11-2021 |
| | | WO 2017148818 A1 | 08-09-2017 |

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- IN 202421022071
- US 20230334407 A1
- IN 202321037342
- IN 202221013927